Europäisches Patentamt

European Patent Office

Office européen des brevets

(19)

(11) Veröffentlichungsnummer: **0 042 037**
**B1**

(12) **EUROPÄISCHE PATENTSCHRIFT**

(45) Veröffentlichungstag der Patentschrift:
**16.01.85**

(21) Anmeldenummer: **81102124.5**

(22) Anmeldetag: **20.03.81**

(51) Int. Cl.⁴: **C 12 C 7/06**

(54) **Maischpfanne.**

(30) Priorität: **12.06.80 DE 3022050**

(43) Veröffentlichungstag der Anmeldung:
**23.12.81 Patentblatt 81/51**

(45) Bekanntmachung des Hinweises auf die Patenterteilung:
**16.01.85 Patentblatt 85/3**

(84) Benannte Vertragsstaaten:
**BE DE GB**

(56) Entgegenhaltungen:
**DE - C - 136 315**
**FR - A - 318 616**

(73) Patentinhaber: **Anton Steinecker Maschinenfabrik GmbH, Münchenerstrasse 18, D-8050 Freising (DE)**

(72) Erfinder: **Wolfseder, Alfons, Blumenstrasse 13, D-8050 Freising (DE)**

(74) Vertreter: **Tetzner, Volkmar, Dr.-Ing. Dr. Jur., Van-Gogh-Strasse 3, D-8000 München 71 (DE)**

## Beschreibung

Die Erfindung betrifft eine Maischpfanne (bzw. Maischbottichpfanne) mit rundem Querschnitt und einem zum Zentrum geneigten, als Heizfläche ausgebildeten Pfannenboden.

Es sind Maischpfannen mit rundem Querschnitt und einem konischen oder gleichmässig gewölbten Heizboden bekannt. Bei derartigen Maischpfannen ist weder die Durchmischung der Maische noch der Wärmeübergang optimal. Die Maische wird in der Pfanne schiebend bewegt, wobei sich die Maischeteilchen vorzugsweise in horizontalen Ebenen bewegen. Um trotzdem eine ausreichende Durchmischung und einen verbesserten Wärmeübergang zu bewirken, ist im allgemeinen der Einbau von Strömungsbrechern notwendig, und es muss darüber hinaus mit einer verhältnismässig hohen Drehzahl des Rührwerks gearbeitet werden. Hohe Umfangsgeschwindigkeiten des Rührwerkes bringen jedoch technologische Nachteile mit sich, da hierdurch sowohl an scharfkantigen Teilen des Rührwerks als auch der Strömungsbrecher die Gefahr einer Beschädigung der Spelzenteilchen besteht.

Es sind weiterhin auch Maischpfannen mit rechteckigem Querschnitt bekannt. Bei ihnen stellt sich zwar eine stärkere Aufwärtsbewegung der Maischeteilchen und damit eine verbesserte Durchmischung ein. In der Nähe der (meist abgerundeten) Ecken des Gefässes ergibt sich jedoch eine pulsierende Rührwirkung und damit eine ungleichmässige Wärmeübertragung. Nachteilig ist weiterhin die auch bei Maischpfannen mit rechteckigem Querschnitt benötigte grosse Umfangsgeschwindigkeit der Rührwerke sowie der verhältnismässig hohe Energieaufwand.

Der Erfindung liegt daher die Aufgabe zugrunde, unter Vermeidung der Mängel der bekannten Ausführungen eine Maischpfanne zu entwickeln, die sich durch eine gute und energiesparende Durchmischung des Pfanneninhaltes auszeichnet, bei der sich ein gleichmässiges Wandern der Maischeteilchen von unten nach oben einstellt, ein annähernd gleicher Kontakt aller Maischeteilchen mit der Heizfläche besteht und bei der darüber hinaus eine besonders schonende Behandlung der Maische gewährleistet ist.

Diese Aufgabe wird erfindungsgemäss dadurch gelöst, dass der Pfannenboden der mit rundem Querschnitt ausgeführten Maischpfanne folgende Teile aufweist:

a) zwei spiegelbildlich zu einer ersten vertikalen Mittelebene der Pfanne angeordnete, einen Winkel zwischen 140 und 156 Grad miteinander einschliessende, eben ausgebildete Bodenteile,

b) zwei spiegelbildlich zu einer zweiten um 90 Grad gegenüber der ersten versetzten vertikalen Mittelebene der Pfanne angeordnete, sich vom Umfang zum Zentrum des Pfannenbodens hin verjüngende Zwickelteile, deren dachartige Schrägflächen einen Winkel zwischen 90 und 130 Grad miteinander einschliessen und deren firstartige Kante mit der Horizontalen einen Winkel zwischen 3 und 5 Grad bildet.

Diese und weitere Einzelheiten der Erfindung gehen aus der folgenden Beschreibung eines in der Zeichnung veranschaulichten Ausführungsbeispiels hervor.

In der ganz schematisch gehaltenen Zeichnung zeigen

Fig. 1 eine Vertikalschnittansicht durch eine Maischepfanne (Schnittführung entlang der vertikalen Schnittebene B in Fig. 2), bei Darstellung ohne Rührwerk;

Fig. 2 eine Horizontal-Querschnittsansicht gemäss der Linie II–II in Fig. 1;

Fig. 3 einen Teil-Vertikalschnitt durch einen Zwickelteil am Pfannenboden, entsprechend der Schnittführung III–III in Fig. 2;

Fig. 4 eine Vertikal-Schnittansicht in der vertikalen Mittelebene A gemäss Fig. 5, bei Ausführung mit einem Rührwerk sowie zur Darstellung der Strömungsverhältnisse in der Pfanne;

Fig. 5 eine Horizontal-Schnittansicht entlang der Linie V–V in Fig. 4, ebenfalls zur Darstellung der Strömungsverhältnisse in der Pfanne.

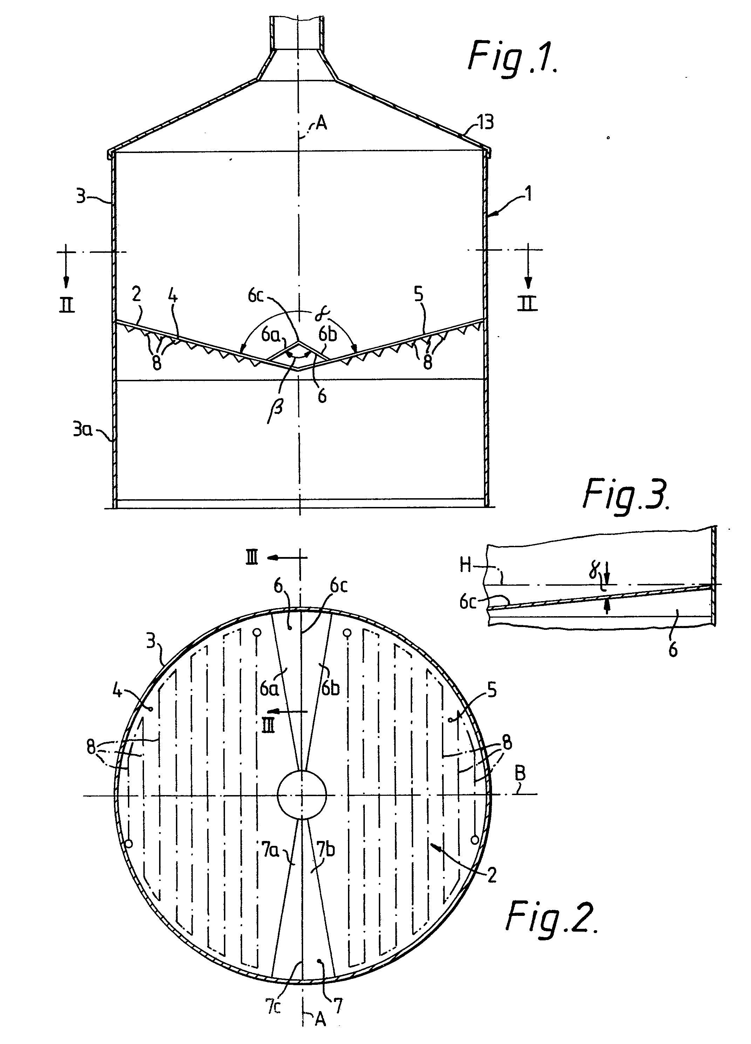

Anhand der Fig. 1 bis 3 sei zunächst insbesondere die Ausbildung des Pfannenbodens selbst erläutert.

Die Maischbottichpfanne bzw. Maischpfanne 1 besitzt – wie aus Fig. 2 ersichtlich – einen runden Querschnitt. Der Pfannenboden 2 ist als Heizfläche ausgebildet und zum Zentrum geneigt. Dieser Pfannenboden 2 ist in dem zylindrischen Gehäusemantel 3 der Maischpfanne 1 befestigt, vorzugsweise eingeschweisst.

Der Pfannenboden 2 selbst setzt sich aus mehreren Teilen zusammen, nämlich aus zwei eben ausgebildeten Bodenteilen 4, 5 und zwei sich vom Umfang zum Zentrum des Pfannenbodens 1 hin verjüngenden Zwickelteilen 6, 7. Die beiden eben ausgebildeten Bodenteile 4, 5, die den deutlich grössten Teil der Bodenfläche des Pfannenbodens 1 darstellen, sind spiegelbildlich zu einer ersten vertikalen Mittelebene A der Pfanne 1 angeordnet, wobei sie einen Winkel α zwischen 140 und 156 Grad miteinander einschliessen; dieser Winkel α beträgt vorzugsweise etwa 150 Grad. Die beiden Zwickelteile 6, 7, die nur einen verhältnismässig kleinen Teil der Pfannenbodenfläche darstellen (vgl. insbesondere Fig. 2), besitzen einen dachartigen Querschnitt (vgl. Zwickelteil 6 in Fig. 1), wobei die dachartigen Schrägflächen 6a, 6b bzw. 7a, 7b jedes Zwickelteiles 6, 7 einen Winkel β zwischen 90 und 130 Grad miteinander einschliessen; vorzugsweise beträgt dieser Winkel β etwa 110 Grad. Bei den sich zum Zentrum des Pfannenbodens 2 hin verjüngenden Zwickelteilen 6, 7 bildet die dachfirstartige (obere) Kante 6c bzw. 7c – wie Fig. 3 zeigt – mit der Horizontalen H einen Winkel γ zwischen 3 und 5 Grad. Die beiden Zwickelteile 6, 7 sind dabei spiegelbildlich zu einer zweiten vertikalen Mittelebene B der Pfanne 1 angeordnet, wobei diese zweite vertikale Mittelebene um 90 Grad gegenüber der ersten vertikalen Mittelebene A versetzt ist.

Da der Pfannenboden 2 als Heizfläche für die Maischpfanne 1 ausgebildet ist, sind entsprechende Heizeinrichtungen erforderlich, die in üblicher Weise an der Unterseite des Pfannenbodens in Form von Heizkanälen, Heizleitungen usw. vorgesehen sein können. Bei der erläuterten Pfannenbodenausführung wird es jedoch vorgezogen, lediglich an den Unterseiten der beiden eben ausgebildeten Bodenteile 4, 5 Heizkanäle 8 vorzusehen; es erfolgt also keine Beheizung des Pfannenbodens unter den Zwickelteilen 6, 7. Die Heizkanäle 8 sind – wie insbesondere Fig. 2 verdeutlicht – im wesentlichen geradlinig ausgebildet und verlaufen etwa parallel zueinander sowie parallel zu der ersten vertikalen Mittelebene A (und damit auch parallel zu den firstartigen Kanten 6c, 7c der Zwickelteile 6, 7, die ebenfalls in der Ebene A liegen). Die Heizkanäle 8 können in jeder geeigneten Form ausgeführt sein, beispielsweise als aufgeschweisste Rohre, aufgeschweisste Halbrohre oder auch – wie in Fig. 1 veranschaulicht – durch entsprechend aufgeschweisste Winkel. Die Beheizung des Pfannenbodens 2 erfolgt somit indirekt, beispielsweise mit Hilfe von Dampf oder einer geeigneten Heizflüssigkeit (z. B. Hochdruckheisswasser). Die zuvor geschilderte Ausführung und Anordnung der Heizkanäle 8 ist besonders einfach im Vergleich zu bekannten Pfannenbodenausführungen, bei denen als Heizkörper Doppelmäntel oder spiralförmig ausgeschweisste Heizrohre bzw. -kanäle vorgesehen sind.

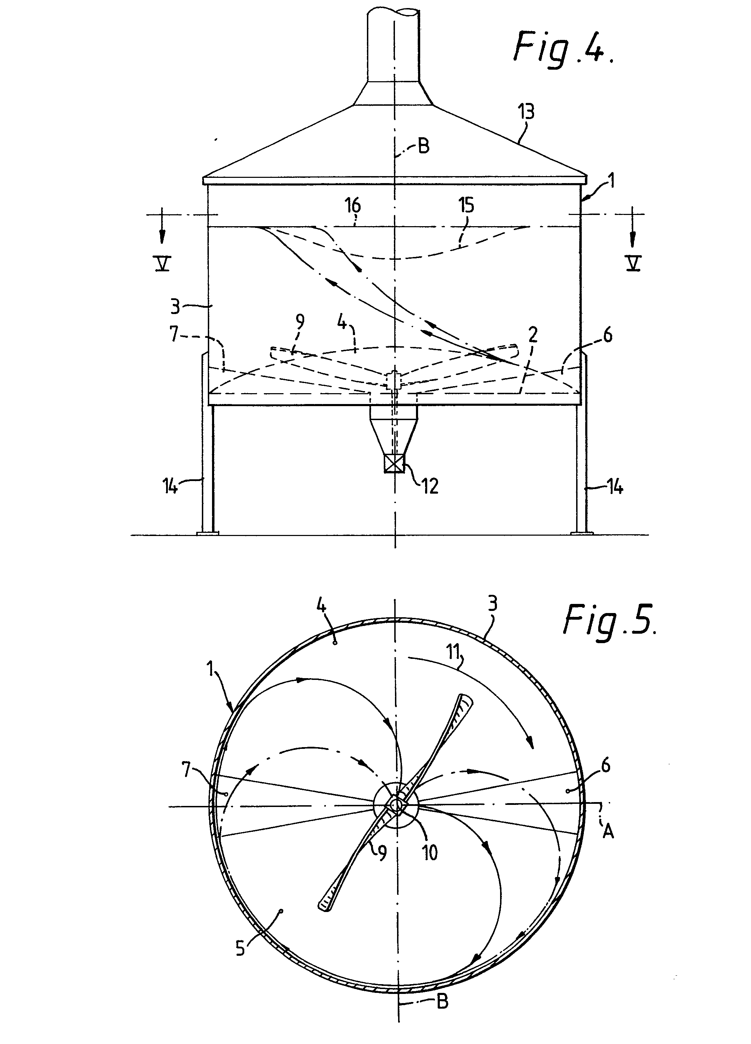

In den Darstellungen der Fig. 4 und 5 ist die Maischpfanne 1 durch ein Rührwerk 9 vervollständigt, das im Zentrum des Pfannenbodens 2 angeordnet ist und um eine vertikale Achse 10 drehend angetrieben werden kann, in diesem Falle in Richtung des Pfeiles 11. Im Beispiel der Fig. 4 ist eine Rührwerksanordnung von unten her angedeutet, mit einem Antrieb 12. Die Maischpfanne 1 kann ansonsten in üblicher Weise ausgebildet sein, wobei sie – je nach Ausbildungsart – eine flache oder – wie in Fig. 1 und 4 veranschaulicht – konische obere Abdeckung 13 aufweist und wobei sie entweder auf einer Art unterer Verlängerung 3a (Fig. 1) des zylindrischen Gehäusemantels 3 oder auf gesonderten Profilstützen 14 (in Fig. 4) aufgestellt sein kann.

Die Arbeitsweise dieser Maischpfanne 1 ist in den Fig. 4 und 5 durch entsprechende Pfeile veranschaulicht. Während des Betriebes wird das Rührwerk 9 in Richtung des Pfeiles 11 in Drehung versetzt, wobei das Rührwerk 9 mit einer Umfangsgeschwindigkeit zwischen 2,0 bis 2,8 m/s, vorzugsweise mit einer Umfangsgeschwindigkeit von etwa 2,5 m/s angetrieben wird. Die von den Heizkanälen 8 über den Pfannenboden 2 indirekt aufgeheizte Maische wird in Richtung der in den Fig. 4 und 5 veranschaulichten Pfeile in Bewegung versetzt, wobei sich die in Fig. 4 gestrichelt angedeutete, verhältnismässig flache Trombe 15 im Bereich des Maischespiegels 16 einstellt. Diese im Vergleich zu bekannten Ausführungen relativ geringe Trombenausbildung verhindert, dass Sauerstoff in die Maische dispergieren kann, was sich hinsichtlich der Qualität des Endproduktes vorteilhaft auswirkt. Besonders günstig wirkt sich auch die Ausbildung und Anordnung der Zwickelteile 6, 7 des Pfannenbodens 2 aus. Diese Zwickelteile 6, 7 tragen trotz der – im Vergleich zu bekannten Ausführungen – verhältnismässig geringen Umfangsgeschwindigkeit des Rührwerks 9 zu einer äusserst guten Durchmischung der sich entsprechend den Pfeilen in den Fig. 4 und 5 bewegenden Maische bei; die Zwickelteile 6, 7 wirken dabei gleichzeitig als sog. Strömungs- oder Wellenbrecher in der durch das Rührwerk 9 bewegten Maische, wodurch eine rein kreisende Bewegung der ganzen Maischefüllung, d.h. eine sich kreisend bewegende Maischefüllung, zuverlässig verhindert wird. Darüber hinaus tragen die verhältnismässig geringe Umfangsgeschwindigkeit des Rührwerks 9 sowie die Formgebung der Zwickelteile 6, 7 zuverlässig dazu bei, dass hierdurch keine Spelzenteilchen in der Maische beschädigt werden.

**Patentansprüche**

1. Maischpfanne mit rundem Querschnitt und einem zum Zentrum geneigten, als Heizfläche ausgebildeten Pfannenboden, dadurch gekennzeichnet, dass der Pfannenboden (2) folgende Teile aufweist:

a) zwei spiegelbildlich zu einer ersten vertikalen Mittelebene (A) der Pfanne (1) angeordnete, einen Winkel ($\alpha$) zwischen 140 und 156 Grad miteinander einschliessende, eben ausgebildete Bodenteile (4, 5),

b) zwei spiegelbildlich zu einer zweiten um 90 Grad gegenüber der ersten versetzten vertikalen Mittelebene (B) der Pfanne angeordnete, sich vom Umfang zum Zentrum des Pfannenbodens hin verjüngende Zwickelteile (6, 7), deren dachartige Schrägflächen einen Winkel ($\beta$) zwischen 90 und 130 miteinander einschliessen und deren firstartige Kante (6c, 7c) mit der Horizontalen einen Winkel ($\gamma$) zwischen 3 und 5 Grad bildet.

2. Maischpfanne nach Anspruch 1, dadurch gekennzeichnet, dass die beiden spiegelbildlich zur ersten vertikalen Mittelebene (A) angeordneten Bodenteile (4, 5) einen Winkel ($\alpha$) von vorzugsweise etwa 150 Grad einschliessen.

3. Maischpfanne nach Anspruch 1, dadurch gekennzeichnet, dass die dachartigen Schrägflächen (6a, 6b, 7a, 7b) jedes Zwickelteiles (6, 7) einen Winkel ($\beta$) von vorzugsweise etwa 110 Grad einschliessen.

4. Maischpfanne nach Anspruch 1, wobei im Zentrum des Pfannenbodens ein sich um eine etwa vertikale Achse drehendes Rührwerk angeordnet ist, dadurch gekennzeichnet, dass das Rührwerk (9) mit einer Umfangsgeschwindigkeit zwischen 2,0 bis 2,8 m/s vorzugsweise von etwa 2,5 m/s, antreibbar ist.

5. Maischpfanne nach Anspruch 1, mit an der Unterseite des Pfannenbodens angebrachten Heizkanälen, dadurch gekennzeichnet, dass die Heizkanäle (8) lediglich an den Unterseiten der beiden eben ausgebildeten Bodenteile (4, 5) vorgesehen sind, im wesentlichen geradlinig ausgebildet sind und etwa parallel zueinander sowie etwa parallel zur ersten vertikalen Mittelebene (A) verlaufen.

## Claims

1. Mash-tub with circular cross-section and a tub bottom inclined to the centre and constructed as heating surface, characterised in that the mash-tub bottom (2) comprises the following parts:

a) two planar bottom portions (4, 5) which are disposed in mirror-image manner with respect to a first vertical centre plane (A) of the tub (1) and include an angle ($\alpha$) between 140 and 156°,

b) two gusset portions (6, 7) which are disposed in mirror-image manner with respect to a second vertical centre plane (B) of the tub offset by 90° with respect to the first vertical centre plane and which taper from the periphery to the centre of the tub bottom, the roof-like inclined surfaces of said gusset portions of enclosing an angle ($\beta$) between 90 and 130° and their ridge-like edge (6c, 7c) forming with the horizontal and angle ($\gamma$) between 3 and 5°.

2. Mash-tub according to claim 1, characterised in that the two bottom portions (4, 5) disposed in mirror-image manner with respect to the first vertical centre plane (A) enclose an angle ($\alpha$) of preferably about 150°.

3. Mash-tub according to claim 1, characterised in that the roof-like inclined surfaces (6a, 6b, 7a, 7b) of each gusset portion (6, 7) enclose an angle ($\beta$) of preferably about 110°.

4. Mash-tub according to claim 1 in which in the centre of the tub bottom an agitator rotating about a substantially vertical axis is disposed, characterised in that the agitator (9) can be driven with a peripheral speed between 2.0 to 2.8 m/s, preferably about 2.5 m/s.

5. Mash-tub according to claim 1 comprising heating channels disposed at the lower side of the tub bottom, characterised in that the heating channels (8) are provided only at the lower sides of the two planar bottom portions (4, 5) are made substantially rectilinear and extend substantially parallel to each other and substantially parallel to the first vertical centre plane (A).

## Revendications

1. Cuve-matière de section circulaire, comprenant un fond incliné vers le centre et constituant une surface de chauffe, caractérisée en ce que le fond (2) comprend les éléments suivants:

a) deux parties planes (4, 5) symétriquement inverses par rapport à un premier plan médian vertical (A) de la cuve (1) et inscrivant entre elles un angle ($\alpha$) compris entre 140 et 156 degrés,

b) deux éléments de chevron (6, 7) se rétrécissant de la circonférence vers le centre du fond de la cuve, symétriquement inverses par rapport à un second plan médian vertical (B) de la cuve qui est décalé de 90 degrés par rapport au premier, les surfaces inclinées, en forme de faîte de toit, de ces éléments de chevron (6, 7) inscrivant entre elles un angle ($\beta$) compris entre 90 et 130 degrés, l'arête en forme de crête de toit (6c, 7c) formant avec l'horizontale un angle ($\gamma$) compris entre 3 et 5 degrés.

2. Cuve-matière selon la revendication 1, caractérisée en ce que les deux parties planes du fond (4, 5) qui sont symétriquement inverses par rapport au premier plan médian vertical (A) inscrivent entre elles un angle ($\alpha$) de préférence d'environ 150 degrés.

3. Cuve-matière selon la revendication 1, caractérisée en ce que les surfaces obliques en forme de faîte de toit (6a, 6b, 7a, 7b) de chaque élément de chevron (6, 7) inscrivent entre elles un angle ($\beta$) de préférence d'environ 110 degrés.

4. Cuve-matière selon la revendication 1, au centre du fond de laquelle est disposé un agitateur rotatif autour d'un axe sensiblement vertical, caractérisée en ce que l'agitateur (9) entraîné en rotation tourne avec une vitesse circonférentielle comprise entre 2,0 et 2,8 m/s, de préférence d'environ 2,5 m/s.

5. Cuve-matière selon la revendication 1 comprenant des canaux de chauffage placés sur la face inférieure du fond, caractérisée en ce que les canaux de chauffage (8) ne sont prévus que sur la face inférieure des deux parties planes du fond (4, 5), ces canaux étant sensiblement rectilignes et approximativement parallèles les uns aux autres ainsi qu'au premier plan médian vertical (A).

Fig.1.

Fig.3.

Fig.2.

Fig.4.

Fig.5.